# EUROPEAN PATENT SPECIFICATION

(11) **EP 2 589 773 B1**
(45) Date of publication and mention of the grant of the patent: **09.07.2014**
(21) Application number: 12789813.8
(22) Date of filing: 09.05.2012
(51) Int. Cl.: F02B 67/06, F16H 7/08, F02B 61/02

(54) **ENGINE AND SADDLE-TYPE VEHICLE AND METHOD OF ATTACHING THE CHAIN**
MOTOR UND SATTELFAHRZEUG UND VERFAHREN ZUM BEFESTIGEN EINER KETTE
MOTEUR ET VEHICULE A SELLE ET PROCEDURE POUR ATTACHER LA CHAINE

(30) Priority: 20.05.2011 JP 2011114003
(43) Date of publication of application: 08.05.2013
(73) Proprietor: Yamaha Hatsudoki Kabushiki Kaisha, Iwata-shi, Shizuoka 438-8501 (JP)
(72) Inventor: INOMORI Toshinori, Iwata-shi Shizuoka 438-8501 (JP); NAKAJIMA Akitoshi, Iwata-shi Shizuoka 438-8501 (JP)
(74) Representative: Grünecker, Kinkeldey, Stockmair & Schwanhäusser
(86) International application number: PCT/JP2012/061822
(87) International publication number: WO 2012/160969

(56) References cited:
- WO-A1-97/33104
- JP-A- 9 317 491
- JP-A- S5 612 007
- JP-A- 2001 153 192
- JP-A- 2001 173 454
- JP-A- 2004 028 346
- JP-A- 2009 052 424
- JP-A- 2011 064 259
- JP-U- 60 007 447

## Description

### TECHNICAL FIELD

The present invention relates to an engine and a straddle type vehicle, and more particularly to an engine and a straddle type vehicle where a cam chain can be easily attached and detached.

### BACKGROUND ART

Motorcycles, which are a type of straddle type vehicles, are known. An engine included in a motorcycle is disclosed in JP 2009-228673 A, for example. In the engine of JP 2009-228673 A, motive power from the crankshaft is transmitted to the camshaft via a cam chain.

The cam chain is disposed in a chain room. The chain room is formed along a crankcase, cylinder body and cylinder head. The cam chain is tensioned so as not to go slack. The engine of JP 2009-228673 A includes a tensioner that presses a chain guide onto the cam chain. The tensioner tensions the cam chain.

The cam chain may be attached to the engine in the following way: with the cylinder body and cylinder head not being attached to the crankcase, the cam chain is wound around the sprocket attached to the crankshaft. Then, the cam chain guide is attached to the cylinder body before the cylinder body is attached to the crankcase. The cylinder head is attached to the cylinder body, and the cam chain is wound around the sprocket that is to be attached to the camshaft. The sprocket for the camshaft is fixed onto the camshaft. Finally, the tensioner is attached to the cylinder head to tension the cam chain.

### DISCLOSURE OF THE INVENTION

The engine of JP 2009-228673 A includes a tensioner in addition to a cam chain guide, meaning a greater number of parts. To reduce the number of parts, a blade tensioner that serves as both a tensioner and a cam chain guide may be used. In such implementations, a blade tensioner is attached in a stage in which a cam chain guide would be attached. In such implementations, the blade tensioner already tensions the cam chain when the blade tensioner is attached. In such an arrangement, it is difficult to wind the cam chain around the sprocket for the camshaft due to the tension applied to the cam chain at this time.

Some cylinder bodies may have a side that can be opened and closed. If a cylinder body has a side that can be opened, this side of the cylinder body and cylinder head may be opened to support the blade tensioner such that the cam chain is not tensioned when the cam chain is attached, for example. However, most engines of straddle type vehicles include a cylinder body that does not have a side that can be opened. In such implementations, it is difficult to attach the cam chain, as discussed above. WO 9733104 is the closest prior art for claims 1 and 11.

An object of the present invention is to provide an arrangement using a blade tensioner to tension the cam chain where the cam chain can be easily attached to an engine including a cylinder body that does not have a side that can be opened.

The engine according to an embodiment of the present invention is an engine including a chain room, including: a crankshaft; a camshaft; a first sprocket; a second sprocket; a crankcase; a cylinder body; a cylinder head; a head cover; a chain; and a tensioning member. The first sprocket is attached to the crankshaft. The second sprocket is attached to the camshaft. The crankcase contains the first sprocket. The cylinder body is attached to the crankcase. The cylinder head is attached to the cylinder body. The head cover is attached to the cylinder head. The chain is wound around the first sprocket and the second sprocket. The tensioning member tensions the chain. The tensioning member includes a leaf spring and a contact member. The contact member supports the leaf spring and is contactable with the chain in the chain room. The crankcase, the cylinder body and the cylinder head form the chain room containing the chain. The cylinder body includes a cylindrical portion forming part of the chain room. The engine further includes a support shaft and a support member. The support shaft is inserted into a support hole formed in the tensioning member for swingably supporting the tensioning member on the crankcase. The support member is contactable with a supported portion of the tensioning member to support the tensioning member. The support member is provided on the head cover. The support member is configured to support the tensioning member in such a way that the supported portion is slidable.

In the engine of an embodiment of the present invention, the support member is provided on the head cover, thereby reducing tension applied to the chain by the tensioning member when the head cover is not yet attached to the cylinder head. Thus, the supported portion of the tensioning member does not prevent the worker from attaching the chain, making it easier to attach the chain. Even if the engine includes a cylinder body that does not have a side that can be opened, the chain can be easily attached to the engine since the head cover may be attached while supporting the supported portion of the tensioning member after the chain is attached.

### BRIEF DESCRIPTION OF THE DRAWINGS

[FIG. 1] FIG. 1 illustrates an entire motorcycle according to an embodiment of the present invention.
[FIG. 2] FIG. 2 is a cross-sectional view of a front portion of the power unit as viewed from above.
[FIG. 3] FIG. 3 is a cross-sectional view of a rear portion of the power unit as viewed from above.
[FIG. 4] FIG. 4 is a cross-sectional view of the power transmitting mechanism as viewed from above.
[FIG. 5] FIG. 5 is a left side view of the power transmitting mechanism.
[FIG. 6] FIG. 6 is a left side view of a power transmitting mechanism of a second embodiment.

### BEST MODES FOR CARRYING OUT THE INVENTION

Now, a motorcycle 10 according to an embodiment of the present invention will be described with reference to the drawings. The present embodiment illustrates the motorcycle 10 as a scooter-type motorcycle. The same or corresponding parts in the drawings are labeled with the same numerals and their description will not be repeated.

### [First Embodiment]

### <Overall Configuration>

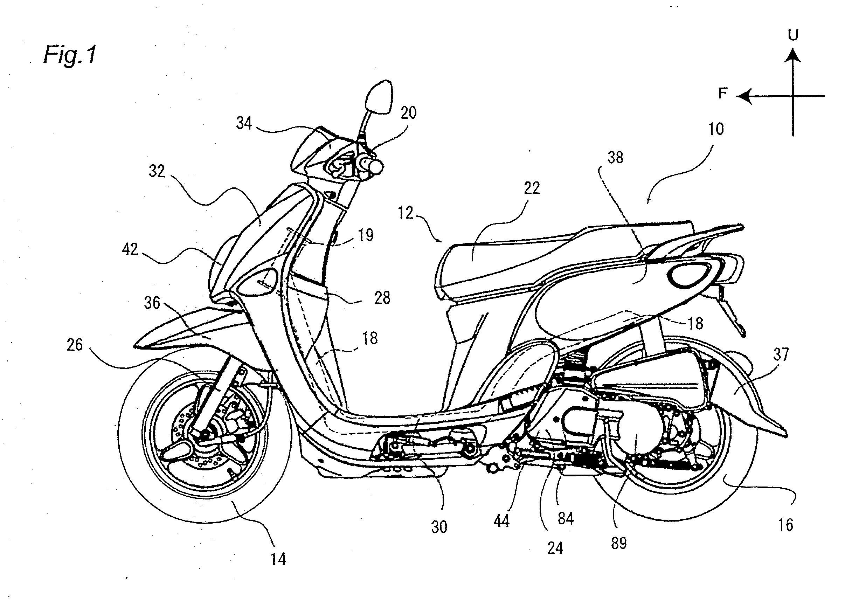

FIG. 1 illustrates a left side view of the entire motorcycle 10 according to the present invention. In the following description, the directions "front/forward", "rear(ward)", "left" and "right" mean directions as perceived by a rider sitting on the seat 22 of the motorcycle 10 described below. In some drawings, arrow "F" indicates the forward direction with respect to the motorcycle 10, and arrow "U" indicates the upward direction with respect to the motorcycle 10.

The motorcycle 10 includes a vehicle body 12, a front wheel 14 provided in a front portion of the motorcycle 10, and a rear wheel 16 provided in a rear portion of the motorcycle 10.

The vehicle body 12 generally includes a vehicle body frame 18, handlebars 20, a seat 22 and a power unit 24.

The body frame 18 supports the power unit 24 and seat 22. In FIG. 1, the body frame 18 is shown in broken lines. The body frame 18 includes a head pipe 19. A steering shaft is rotatably inserted into the head pipe 19. The handlebars 20 are attached to the top end of the steering shaft. A front fork 26 is attached to the both sides of the steering shaft. The front wheel 14 is rotatably attached to the bottom end of the front fork 26. The body frame 18 is made of a rigid metal such as steel.

The body frame 18 is covered with a vehicle body cover 28. The body cover 28 is made of resin. The body cover 28 includes a footboard 30, front cover 32, handle cover 34, front fender 36, rear fender 37 and side covers 38.

The footboard 30 is provided below the seat 22. The footboard 30 extends in a front-to-rear direction.

The front cover 32 is located forward of the seat 22. The front cover 32 covers the head pipe 19. A headlight 42 is located on the front cover 32.

The handle cover 34 covers part of the handlebars 20. The handle cover 34 is provided above the front cover 32. A panel that displays measuring instruments such as a speedometer, not shown, is attached to the handle cover 34.

The front fender 36 is located above the front wheel 14. The front fender 36 is located below the front cover 32. The front fender 36 projects forward from the front cover 32. The rear fender 37 is located above the rear wheel 16.

The side covers 38 are provided below the seat 22. The side covers 38 are located above the rear wheel 16. The side covers 38 extend rearward from below the seat 22.

The handlebars 20 are located forward of a rider sitting on the seat 22. The handlebars 20 extend to the left and right. A grip that can be grasped by the rider is located on each end of the handlebars 20.

The seat 22 is located above the power unit 24. A storage space that can store an object, such as a helmet, is provided below the seat 22.

The power unit 24 is located in the vicinity of the rear wheel 16. An engine 44, crankcase 84 and transmission case 89, included in the power unit 24, are not covered with the body cover 28. Details of the power unit 24 will be described below.

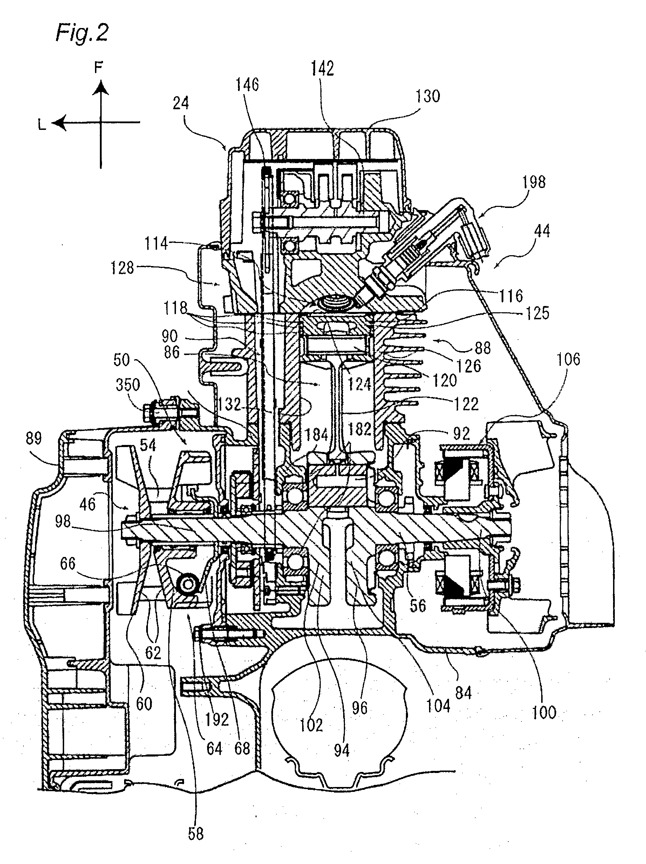

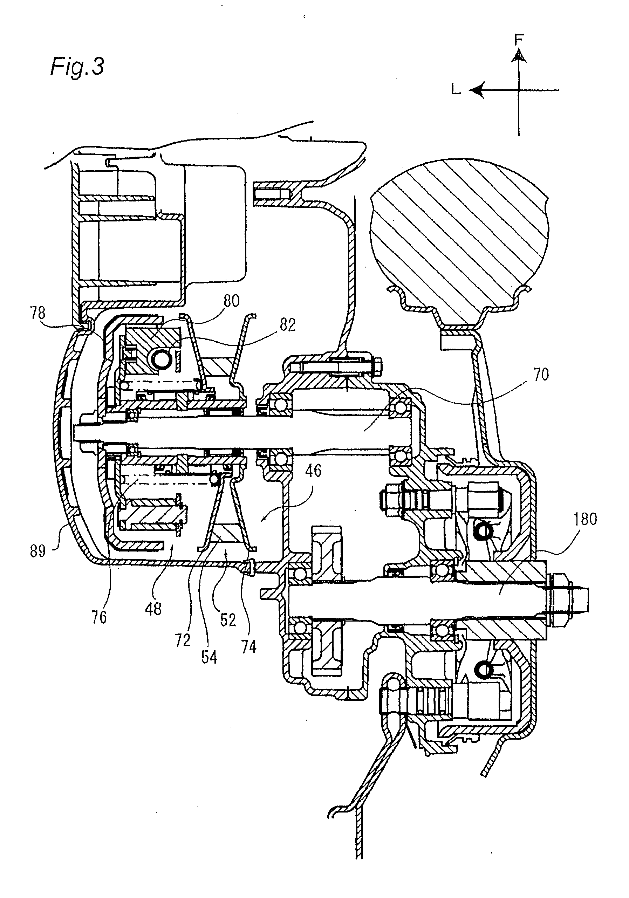

Next, the power unit 24 will be described with reference to FIGS. 2 and 3. FIG. 2 is a cross-sectional view of the engine 44 and crankcase 84 of the power unit 24 as viewed from above. FIG. 3 is a cross-sectional view of part of the transmission 46 of the power unit 24 as viewed from above. FIG. 3 shows components located rearward of those of FIG. 2. In FIGS. 2 and 3, arrow "F" indicates the forward direction with respect to the vehicle, and arrow "L" indicates the left direction with respect to the vehicle.

The power unit 24 is a swingarm-type power unit. The power unit 24 generally includes an engine 44 (FIG. 2), a transmission 46 (FIGS. 2 and 3) located to the left of the engine 44 and a centrifugal clutch 48 (FIG. 3) located to the left of the transmission 46. The engine 44 will be discussed in detail below.

The transmission 46 is a continuously variable transmission using a V-belt 54. The transmission 46 includes a driving pulley 50, a driven pulley 52 and the V-belt 54.

As shown in FIG. 2, the driving pulley 50 is attached to the left end of the crankshaft 56 in the engine 44. The driving pulley 50 includes a first driving pulley portion 58 and second driving pulley portion 60. The first driving pulley portion 58 is located opposite the second driving pulley portion 60. The second driving pulley portion 60 is located to the left of the first driving pulley portion 58. Each of the first and second driving pulley portions 58 and 60 has a sloping surface 62, the sloping surfaces being gradually separated from each other as they go toward their peripheries. A distance control mechanism 64 for controlling the distance between the first and second driving pulley portions 58 and 60 is provided for the driving pulley 50.

The distance control mechanism 64 includes a plurality of weight rollers 66 and a disk member 68 provided to the right of the first driving pulley portion 58. The disk member 68 is made of a rigid material. As the weight rollers 66 move toward the periphery of the pulley, the weight rollers 66 move the first driving pulley portion 58 toward the second driving pulley portion 60.

The driven pulley 52 will be described with reference to FIG. 3. FIG. 3 illustrates the centrifugal clutch 48 and part of the transmission 46.

Power is transmitted from the driving pulley 50 to the driven pulley 52 such that the driven pulley is rotated. The driven pulley 52 is attached to a first output shaft 70 positioned parallel to the crankshaft 56. The driven pulley 52 includes a first driven pulley portion 72 and a second driven pulley portion 74 located to the right of the first driven pulley portion 72. A spring 76 supported by a plate of the centrifugal clutch 48 applies a force to the first driven pulley portion 72 toward the right in FIG. 3 such that the first driven pulley portion approaches the second driven pulley portion 74.

The V-belt 54 transmits power from the driving pulley 50 to the driven pulley 52. The V-belt 54 wrapped around the driving pulley 50 and the driven pulley 52. More particularly, the V-belt 54 is sandwiched by the first and second driving pulley portions 58 and 60 and sandwiched by the first and second driven pulley portions 72 and 74.

The centrifugal clutch 48 is connected with the left side of the driven pulley 52 of the transmission 46. The centrifugal clutch 48 is provided on one end of the first output shaft 70. The centrifugal clutch 48 generally includes a clutch housing 78, clutch shoe 80 and clutch spring 82. As the rotational rate of the driving pulley 50 increases, the rotational rate of the clutch shoe 80 increases, as well. The clutch shoe 80 is pressed against the clutch housing 78 by a centrifugal force such that the torque of the clutch shoe 80 is transmitted to the clutch housing 78. The power transmitted to the clutch housing 78 is transmitted to the first output shaft 70 connected with the clutch housing 78.

A second output shaft 180, to which the rear wheel 16 is connected, is located rearward of the first output shaft 70. Power can be transmitted between the first and second output shafts 70 and 180 via gears, not shown.

### <Engine>

Next, the engine 44 will be described in detail, mainly with reference to FIG. 2.

The engine 44 generates motive power for the motorcycle 10. The engine 44 is an air-cooled engine. The engine 44 generally includes a crankshaft 56, crankcase 84, cylinder 88, piston 86 and power transmitting mechanism 90. The piston 86 is located forward of the crankshaft 56. The power transmitting mechanism 90 is located to the left of the piston 86.

Power is transmitted from the piston 86 to the crankshaft 56 such that the crankshaft rotates. The crankshaft 56 generally includes a crankpin 92, first crank web 94, second crank web 96, first crankshaft portion 98 and second crankshaft portion 100.

The crankpin 92 connects the crankshaft 56 with a connecting rod 122 of the piston 86.

The first crank web 94 supports the crankpin 92. A weight 102 is provided on the first crank web 94 for reducing inertia generated by vibrations of the piston 86 and connecting rod 122. The first crank web 94 is plate-shaped.

The second crank web 96 supports the crankpin 92. The second crank web 96 is located opposite the first crank web 94. A weight 104 is provided on the second crank web 96 for reducing inertia generated by vibrations of the piston 86 and connecting rod 122. The second crank web 96 is plate-shaped.

The first crankshaft portion 98 is connected with the first crank web 94. The first crankshaft portion 98 extends from the first crank web 94 in a direction generally perpendicular thereto. The driving pulley 50 of the transmission 46 is provided on an end of the first crankshaft portion 98.

The second crankshaft portion 100 is connected with the second crank web 96. The second crankshaft portion 100 extends from the second crank web 96 in a direction generally perpendicular thereto. A generator 106 is provided on an end of the second crankshaft portion 100. The generator 106 generates electric power.

The crankcase 84 supports the crankshaft 56 via bearings. A transmission case 89 containing the transmission 46 and other components is located rearward of the crankcase 84. The crankcase 84 is connected with the transmission case 89 by means of a bolt 350.

The cylinder 88 guides the piston 86 such that the piston reciprocates in a rectilinear manner. The cylinder 88 includes a cylinder body 126, cylinder head 128 and head cover 130. The cylinder body 126 is attached to the crankcase 84. The cylinder head 128 is attached to the cylinder body 126. The cylinder head 128 is located forward of the cylinder body 126. The head cover 130 is located forward of the cylinder head 128.

A cylinder bore 132 having a circular cross-section is provided in the cylinder body 126. The piston 86 is located in the cylinder bore 132 of the cylinder body 126. The cylinder bore 132 guides the direction of travel of the piston 86.

The cylinder head 128 is located on the end of the cylinder body 126 opposite that with the crankcase 84. The cylinder head 128 has walls which define a combustion chamber 114, which is in communication with the cylinder bore 132 of the cylinder body 126. The combustion chamber 114 has a plurality of holes (not shown) that are in communication with the outside of the combustion chamber 114. Valves, not shown, are provided in these holes and can be driven when air is to be taken into, and discharged from, the combustion chamber 114. A fuel supply device, not shown, is attached to the combustion chamber 114 for supplying fuel. An ignition device 198 is attached to the cylinder head 128 for igniting mixed air in the combustion chamber 114. A camshaft 142 is located on the cylinder head 128 for driving the valves on the combustion chamber 114. The face of the cylinder head 128 connected to the head cover 130 has a larger area than the face thereof connected to the cylinder body 126.

The piston 86, together with the cylinder head 128 of the engine 44, defines the combustion chamber 114. The piston 86 receives pressure from combustion gas in the combustion chamber 114 to rotate the crankshaft 56. The piston 86 is attached to the crankshaft 56. The piston 86 includes a piston head 116, piston rings 118, piston pin 120 and connecting rod 122.

The piston head 116 includes a disk-shaped end face 124 and a cylindrical portion 125 extending from the periphery of the end face 124, perpendicularly thereto. A piston boss, into which the piston pin 120 can be inserted, is formed on a side of the piston head 116. Three ring grooves, into which the piston rings 118 can be inserted, are formed on the piston head 116, forward of the piston boss. Valve recesses are formed on the end face 124 of the piston head 116.

The piston rings 118 include two compression rings and an oil ring. The compression rings are inserted into the two of the ring grooves that are closer to the end face 124. The oil ring prevents mixed air and/or combustion gas from leaking out of the gap between the piston 86 and the cylinder body 126 of the cylinder 88. The oil ring scrapes oil off the guide wall of the cylinder body 126.

The piston pin 120 is inserted into the piston boss of the piston head 116 and connects the connecting rod 122 with the piston head 116.

The connecting rod 122 transmits motion of the piston head 116 to the crankshaft 56. The connecting rod 122 is connected with the piston head 116 and crankshaft 56. Each end of the connecting rod 122 has a cylindrical hole, into which the crankpin 92 or piston pin 120 can be inserted.

The head cover 130 is attached to a front portion of the cylinder head 128 via a bolt. The head cover 130 covers a space in which the camshaft 142 and other components are located.

The power transmitting mechanism 90 transmits power from the crankshaft 56 to the camshaft 142 to drive the valves on the combustion chamber 114. Details of the power transmitting mechanism 90 will be described below.

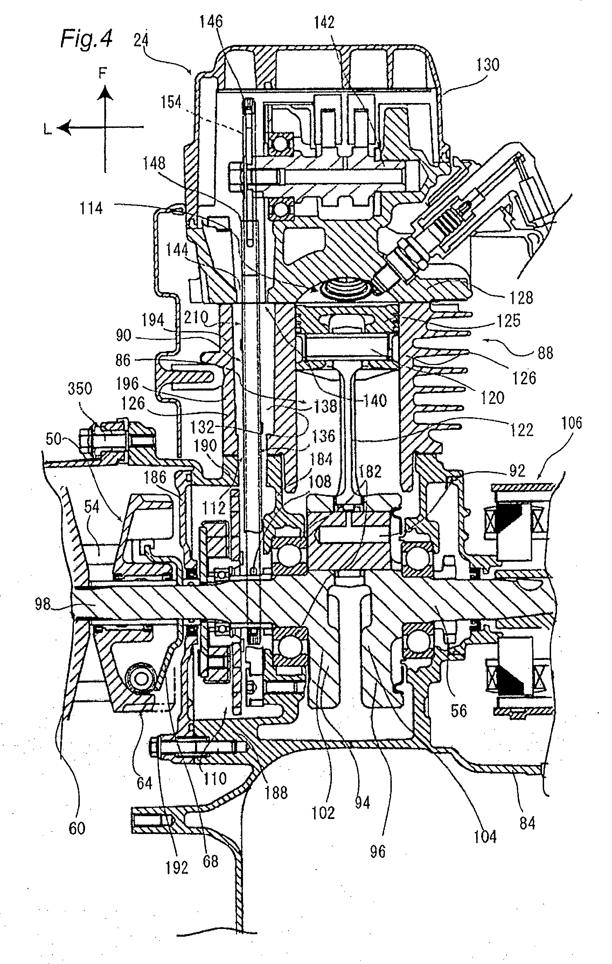

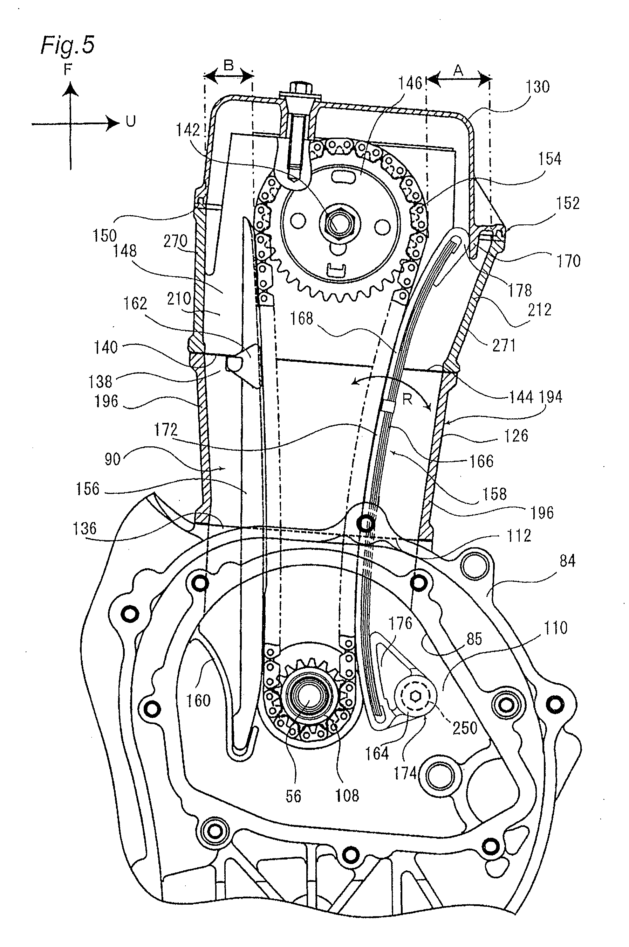

The power transmitting mechanism 90 will be described with reference to FIGS. 4 and 5. FIG. 4 is an enlarged view of some of the components shown in FIG. 2. FIG. 5 is a partial cross-sectional view of the chain room 210 of FIG. 4 as viewed from the left. In FIG. 5, arrow "F" indicates the forward direction with respect to the vehicle, and arrow "U" indicates the upward direction with respect to the vehicle.

The power transmitting mechanism 90 includes a chain room 210, first sprocket 108, second sprocket 146, cam chain 154, chain guide 156 and tensioner 158.

The chain room 210 is provided to the left of the piston 86. The chain room 210 contains the first sprocket 108, second sprocket 146, cam chain 154, chain guide 156 and tensioner 158. The chain room 210 includes a first subroom 110 provided in the crankcase 84, a second subroom 138 provided in the cylinder body 126 and a third subroom 148 provided in the cylinder head 128.

The first subroom 110 contains the first sprocket 108. The first subroom 110 extends in a direction perpendicular to a direct line that connects the shaft center of the crankshaft 56 with the shaft center of the camshaft 142 as viewed in a direction of the axis of the crankshaft 56, i.e. in a direction perpendicular to the paper in FIG. 2 (top-to-bottom direction).
In other words, the first subroom 110 extends in a direction perpendicular to a plane containing the crankshaft 56 and camshaft 142. The first subroom 110 is surrounded by a first wall 184, second wall 186, third wall 188, fourth wall 190 and other components. Further, upper and lower portions of the first subroom 110 are covered with the crankcase 84. A bearing 182 is attached to the first wall 184 for supporting the first crankshaft portion 98. The second wall 186 is located to the right of the driving pulley 50. The third wall 188 connects the first wall 184 with the second wall 186. The fourth wall 190 has a first opening 112 exposing the first subroom 110. The fourth wall 190 is located forward of the first subroom 110. The second wall 186 is connected with the third wall 188 and fourth wall 190 by means of a bolt 192.

The second subroom 138 is formed within the cylindrical portion 194 of the cylinder body 126. A second opening 136 in alignment with the first opening 112 is formed on one end of the cylindrical portion 194. A third opening 140 exposing the second subroom 138 is formed on the other end of the cylindrical portion 194. The first and second subrooms 110 and 138 are connected with each other via the first and second openings 112 and 136. In other words, the first subroom 110 is connected with the second subroom 138 via one end of the cylindrical portion 194. The second subroom 138 is located to the left of the cylinder bore 132. The second subroom 138 has a rectangular cross section. The second subroom 138 is surrounded by the wall 196 of the cylindrical portion 194. The cylindrical portion 194 is only open at the one end and the other end. That is, the cylindrical portion 194 is only in communication with the outside of the second subroom 138 at the one end and the other end.

The third subroom 148 contains the second sprocket 146 attached to an end of the camshaft 142. A fourth opening 144 in alignment with the third opening 140 is formed at a rear portion of the cylinder head 128. The second and third subrooms 138 and 148 are connected with each other via the third and fourth openings 140 and 144. That is, the third subroom 148 is connected with the second subroom 138 via the other end of the cylindrical portion 194. As shown in FIG. 5, the third subroom 148 is surrounded by sidewalls including the first sidewall 270 and second sidewall 271 of the cylinder head 128, which are arranged in a direction perpendicular to a line segment connecting the shaft center of the crankshaft 56 with the shaft center of the camshaft 142 as viewed in a direction of the axis of the crankshaft 56, i.e. in a top-to-bottom direction.

The first sidewall 270 is disposed substantially parallel with a direct line connecting the shaft center of the crankshaft 56 with the shaft center of the camshaft 142. The second sidewall 271 is located above the first sidewall 270. The second sidewall 271 slopes gradually upward as it goes forward. That is, the second sidewall 271 extends gradually farther from the first sidewall 270 as it goes forward.

The head cover 130 and cylinder head 128 include a positioning mechanism. The positioning mechanism prevents the head cover 130 and cylinder head 128, as put together, from being misaligned when the head cover 130 is mounted on the cylinder head 128 but not fixed thereto by a bolt. The positioning mechanism includes a projection 150 provided on the face of the cylinder head 128 that may contact the head cover 130 and a depression 152 provided in the face of the head cover 130 that may contact the cylinder head 128. The depression 152 is formed opposite the projection 150 of the cylinder head 128. The projection 150 may fit into the depression 152. In the present embodiment, the projection 150 is formed on the cylinder head 128 while the depression 152 is formed in the head cover 130; alternatively, however, a depression may be formed in the cylinder head 128 while a projection may be formed on the head cover 130.

The first sprocket 108 is attached to the first crankshaft portion 98. The first sprocket 108 is adjacent the first crank web 94. The first sprocket 108 is shaped like a disk.

The second sprocket 146 is shaped like a disk with a diameter greater than that of the first sprocket 108. The second sprocket 146 is attached to an end of the camshaft 142 by means of a bolt.

The cam chain 154 transmits power from the first sprocket 108 to the second sprocket 146. The cam chain 154 is wound around the first and second sprockets 108 and 146. The cam chain 154 is disposed in, and runs through, the first subroom 110, second subroom 138 and third subroom 148. The distance A between the portion of the second sidewall 271 that may contact the head cover 130 and the cam chain 154 is greater than the distance B between the portion of the first sidewall 270 that may contact the head cover 130 and the cam chain 154. In the present embodiment, the cam chain 154 is a silent chain.

The chain guide 156 guides the cam chain 154. The chain guide 156 is disposed in, and extends through, the first subroom 110, second subroom 138 and third subroom 148. The chain guide 156 is supported by a first guide support 160 contained in the crankcase 84 and a second guide support 162 attached to the cylinder body 126. The second guide support 162 is provided on the chain guide 156. The chain guide 156 may be fabricated by bending a plate and baking rubber onto the bent plate. The chain guide 156 extends from the first subroom 110 toward the third subroom 148. In other words, the chain guide 156 extends in a front-to-rear direction. The chain guide 156 extends in a front-to-rear direction such that one end thereof is in the vicinity of the camshaft 142, which defines the center of rotation of the second sprocket 146. The chain guide 156 extends such that the other end thereof is in the vicinity of the crankshaft 56, which defines the center of rotation of the first sprocket 108.

The tensioner 158 tensions the cam chain 154. The tensioner 158 is disposed in, and extends through, the first subroom 110, second subroom 138 and third subroom 148. More particularly, the tensioner 158 is disposed between the cam chain 154 and a sidewall of the crankcase 84, between the cam chain 154 and a sidewall of the cylinder body and between the cam chain 154 and the second sidewall 271 of the cylinder head 128. The tensioner 158 can be bent like a bow. In other words, the tensioner 158 can be curved in an arc. The tensioner 158 includes a leaf spring 166 and blade shoe 168. The tensioner 158 is attached to the crankcase 84 via a bolt 164. The tensioner 158 is swingable as viewed in a direction of the axis of the crankshaft 56. More particularly, the tensioner 158 is swingable in the directions of arrow R in FIG. 5. The tensioner 158 is located between the second sidewall 271 defining the third subroom 148 and the cam chain 154.

The bolt 164 serves as a fulcrum about which the tensioner 158 can swing. The bolt 164 is attached to the crankcase 84. The bolt 164 swingably supports the tensioner 158 relative to the crankcase 84. The bolt 164 is disposed parallel to the crankshaft 56. The bolt 164 is provided adjacent the rear end of the tensioner 158. The bolt 164 is provided in the first subroom 110.

The leaf spring 166 receives forces from the bolt 164, support member 170 and cam chain 154 so as to be deformed elastically. The leaf spring 166 receives a reaction force having a downward component from the support member 170. The leaf spring 166 receives a reaction force having an upward component from the cam chain 154. The leaf spring 166 is fabricated by laminating several, in the present embodiment four, rectangular metal members. The leaf spring 166 can be curved in an arc as viewed in a direction of the axis of the crankshaft 56. In other words, the leaf spring 166 can be bent like a bow. One end of the leaf spring 166 is located in the cylinder head 128. The other end of the leaf spring 166 is located in the crankcase 84.

The blade shoe 168 may be in contact with the cam chain 154 and head cover 130. The blade shoe 168 is attached to the leaf spring 166. The blade shoe 168 supports the leaf spring 166. The blade shoe 168 is made of resin. The blade shoe 168 includes a plate portion 172, swing fulcrum portion 174, contact/support portion 176 and contact portion 178.

The plate portion 172 covers the side of the leaf spring 166 adjacent to the cam chain 154. The plate portion 172 is provided along the leaf spring 166. The width of the plate portion 172 is generally the same as that of the leaf spring 166. As used herein, "width of the leaf spring 166" means the dimension of the leaf spring measured in a direction of the axis of the crankshaft 56. In other words, "width" means a dimension in a direction perpendicular to the paper in FIG. 5, i.e. in a left-to-right direction in FIG. 4. The plate portion 172 extends in a direction in which the leaf spring 166 extends. The plate portion 172 may be in contact with the cam chain 154, along a front-to-rear direction and between the first and second sprockets 108 and 146.

The swing fulcrum portion 174 is provided at one end (rear end) of the plate portion 172. A support hole 250, into which the bolt 164 can be inserted, is provided in the swing fulcrum portion 174. The swing fulcrum portion 174 is located in the vicinity of the first sprocket 108. The bolt 164 is inserted into the support hole 250 in the swing fulcrum portion 174 and the tensioner 158 is swingably supported on the crankcase 84.

The contact/support portion 176 supports the leaf spring 166 by sandwiching the leaf spring 166 with the plate portion 172. The contact/support portion 176 extends from the swing fulcrum portion 174 along the leaf spring 166.

The contact portion 178 is provided at the other end (front end) of the leaf spring 166. The contact portion 178 is in contact with the side of the leaf spring 166 opposite the side adjacent to the cam chain 154. The contact portion 178 supports the leaf spring 166 by sandwiching the leaf spring 166 with the plate portion 172. The contact portion 178 may contact the support member 170 provided on the head cover 130. The contact portion 178 is located in the vicinity of the second sprocket 146 as measured in a front-to-rear direction.

The support member 170 protrudes from an edge of the head cover 130 into the third subroom 148. The support member 170 is thicker than the wall of the head cover 130. The support member 170 is a rib-shaped portion protruding rearward from a wall of the head cover 130. The support member 170 is a portion that may contact the contact portion 178. The support member 170 may support the tensioner 158 by contacting the contact portion 178. The support member 170 may support the tensioner 158 in such a way that the contact portion 178 is slidable. The support member 170 is located below the second sidewall 271 of the cylinder head. The support member 170 is detachable from the crankcase 84.

### <Operation>

Next, the operations through which power from the engine 44 may be transmitted to the rear wheel will be described.

First, the crankshaft 56 is rotated. Rotation of the crankshaft 56 causes rotation of the first sprocket 108 attached to the crankshaft 56. Power from the first sprocket 108 is transmitted to the second sprocket 146 via the cam chain 154. Rotation of the second sprocket 146 causes rotation of the camshaft 142. Rotation of the camshaft 142 opens the valves. At the same time with the opening of the valves, rotation of the crankshaft 56 drives the piston 86. Thus, air is taken into the combustion chamber 114. The combustion chamber 114 is supplied with fuel from the fuel supply device. Thereafter, rotation of the crankshaft 56 causes mixed air to be compressed, and the mixed air, including air and fuel, is ignited. Combustion of the mixed air causes the piston head 116 to move, causing rotation of the crankshaft 56, which opens the valves. Opening of the valves causes burned gas to be discharged from the combustion chamber 114 to the outside of the chamber 114. It should be noted that the crankshaft 56 is rotated by power from a cell motor, not shown, only when the engine 44 is started.

Rotation of the crankshaft 56 causes, through its power, rotation of the driving pulley 50 of the transmission 46. Power from the driving pulley 50 is transmitted to the driven pulley 52 via the V-belt 54. As the rotational rate of the driven pulley 52 increases, the clutch shoe 80 of the centrifugal clutch 48 contacts the clutch housing 78. Then, power from the centrifugal clutch 48 is transmitted to the first output shaft 70. Power transmitted to the first output shaft 70 is transmitted to the second output shaft 180 by gears, not shown, such that power is transmitted from the second output shaft 180 to the rear wheel 16.

### <Attaching Cam Chain>

A work procedure for attaching the cam chain 154 during assembly or the like of the engine 44 will be described.

First, the cylinder body 126 is attached to the crankcase 84. Then, the cylinder head 128 is attached to the cylinder body 126. In this way, the chain room 210, including the first subroom 110, second subroom 138 and third subroom 148, is assembled. At this stage, the bolt 350 for coupling the crankcase 84 and the transmission case 89 is not yet attached. The bolt 192 for coupling the second wall 186, third wall 188 and fourth wall 190 is not yet attached. Thus, a left portion of the first subroom 110 in FIG. 4 is not covered.

Next, the cam chain 154 is wound around the first sprocket 108 provided on the crankshaft 56. At this time, the cam chain 154 engages a rear portion of the first sprocket 108 and is slack.

Next, the tensioner 158 is inserted into the first subroom 110 through the opening 85 in the crankcase 84 (see FIG. 5). The tensioner 158 is inserted into the second subroom 138 in the cylinder body 126 and the third subroom 148 in the cylinder head 128. At this time, the tensioner 158 is inserted into the second and third subrooms 138 and 148 in such a way that the contact portion 178 of the tensioner 158 defines the leading end. The swing fulcrum portion 174 of the tensioner 158 is positioned in the crankcase 84 and the bolt 164 is put into the hole in the swing fulcrum portion 174. At this stage, the contact portion 178 of the tensioner 158 may be in contact with the second sidewall 271 of the cylinder head 128. At this stage, the tensioner 158 is not tensioning the cam chain 154.

Thereafter, the cam chain 154 is wound around the second sprocket 146. The second sprocket 146, around which the cam chain 154 is wound, is attached to the camshaft 142.

The support member 170 on the head cover 130 is brought into contact with the contact portion 178 of the tensioner 158. With the support member 170 being in contact with the contact portion 178, the contact portion 178 is pressed by the support member 170 while the head cover 130 is attached to the cylinder head 128. The tensioner 158 is deformed elastically to tension the cam chain 154. At this time, the projection 150 on the cylinder head 128 is positioned so as to fit into the depression 152 in the head cover 130. Thereafter, the head cover 130 and cylinder head 128 are fixed to each other by a bolt.

### <Features of First Embodiment>

Features of the present embodiment will be described below.

In the illustrated embodiment, the contact portion 178 of the tensioner 158 is supported by the head cover 130. As long as the head cover 130 is not attached to the cylinder head 128, the tensioner 158 does not tension the cam chain 154. As such, in the illustrated embodiment, the cam chain 154 can be easily attached to the engine 44. Thus, even in an engine 44 including a cylinder head 128 that does not have a sidewall that can be opened, the cam chain 154 may be easily wound around the second sprocket 146 when the head cover 130 is not yet attached.

In the illustrated embodiment, the contact portion 178 of the tensioner 158 is pressed by the head cover 130 while the head cover 130 is attached to the cylinder head 128. Thus, in the illustrated embodiment, deforming the tensioner 158 so as to tension the cam chain 154 with the tensioner 158 occurs simultaneously with attaching the head cover 130 to the cylinder head 128.

In the illustrated embodiment, the support member 170 provided on the head cover 130 extends from an edge of the head cover 130 into the third subroom 148. Thus, in the illustrated embodiment, the support member 170 can be easily brought into contact with the contact portion 178 of the tensioner 158 when the head cover 130 is attached to the cylinder head 128.

In the illustrated embodiment, the upper sidewall 212, which is one of the sidewalls constituting the cylindrical portion 194 of the cylinder head 128, slopes gradually upward as it goes forward such that the front end of the tensioner 158 can be easily brought aside before the head cover 130 is attached to the cylinder head 128.

In the illustrated embodiment, a positioning mechanism is provided at the connecting face between the cylinder head 128 and head cover 130 such that the head cover 130 can be easily attached to the cylinder head 128.

### [Second Embodiment]

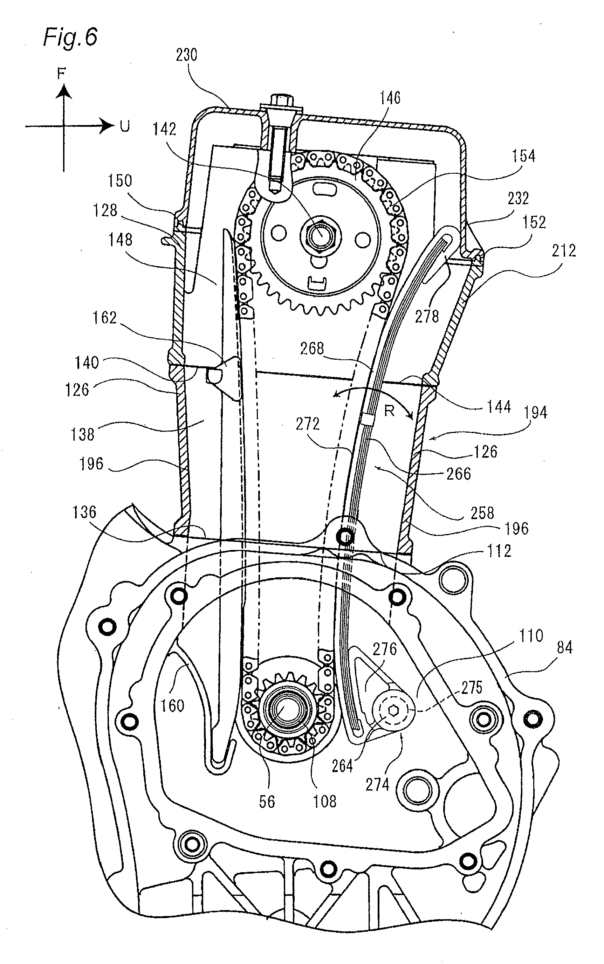

FIG. 6 illustrates a power transmitting mechanism of a motorcycle of a second embodiment. Since the motorcycle of the second embodiment is the same as that of the first embodiment except for the head cover and tensioner, the description of the other components will be omitted. In FIG. 6, the components other than the head cover and tensioner are labeled with the same numerals.

The head cover 230 of the second embodiment is different from the head cover 130 of the first embodiment in that the rib-shaped support member 170 protruding rearward from the face thereof connected to the cylinder head 128 is not provided.

The head cover 230 is a component to be attached to a front portion of the cylinder head 128. The head cover 230 covers the third subroom 148, in which the camshaft 142 of the cylinder head 128 and other components are located. The head cover 230 supports an end of the tensioner 258 with the sidewall 232.

The head cover 230 and cylinder head 128 include a positioning mechanism. The positioning mechanism prevents the head cover 230 and cylinder head 128, as put together, from being misaligned when the head cover 230 is mounted on the cylinder head 128 but not fixed thereto by a bolt. The positioning mechanism includes a projection 150 provided on the face of the cylinder head 128 that may contact the head cover 130 and a depression 152 provided in the face of the head cover 130 that may contact the cylinder head 128. The depression 152 is formed opposite the projection 150 of the cylinder head 128. The projection 150 may fit into the depression 152. In the present embodiment, the projection 150 is formed on the cylinder head 128 while the depression 152 is formed in the head cover 230; alternatively, however, a depression may be formed in the cylinder head 128 while a projection may be formed on the head cover 130.

The tensioner 258 of the second embodiment is different from the tensioner 158 of the first embodiment in the length of the leaf springs and plate portions.

The tensioner 258 tensions the cam chain 154. The tensioner 258 is disposed in, and extends through, the first subroom 110, second subroom 138 and third subroom 148. More particularly, the tensioner 258 is disposed between the cam chain 154 and a sidewall of the crankcase 84, between the cam chain 154 and a sidewall of the cylinder body 126 and between the cam chain 154 and the second sidewall 271 of the cylinder head 128. The tensioner 258 can be bent like a bow. In other words, the tensioner 258 can be curved in an arc. The tensioner 258 includes a leaf spring 266 and blade shoe 268. The tensioner 258 is attached to the crankcase 84 via a bolt 264. The tensioner 258 is swingable as viewed in a direction of the axis of the crankshaft 56. More particularly, the tensioner 158 is swingable in the directions of arrow R in FIG. 6 between its position indicated by solid lines in FIG. 6 and its position indicated by one-dot chain lines for its rear end.

The bolt 264 serves as a fulcrum about which the tensioner 258 can swing. The bolt 264 is attached to the crankcase 84. The bolt 264 swingably supports the tensioner 258 relative to the crankcase 84. The bolt 264 is disposed parallel to the crankshaft 56. The bolt 264 is provided adjacent the rear end of the tensioner 258. The bolt 264 is provided in the first subroom 110.

The leaf spring 266 receives forces from the bolt 264, sidewall 232 and cam chain 154 so as to be deformed elastically. The leaf spring 266 receives a reaction force having a downward component from the sidewall 232 of the head cover 230. The leaf spring 266 receives a reaction force having an upward component from the cam chain 154. The leaf spring 266 is fabricated by laminating several, in the present embodiment four, rectangular metal members. The leaf spring 266 can be curved in an arc as viewed in a direction of the axis of the crankshaft 56. In other words, the leaf spring 266 can be bent like a bow. One end of the leaf spring 266 is located in the head cover 230. The other end of the leaf spring 266 is located in the crankcase 84.

The blade shoe 268 may be in contact with the cam chain 230 and head cover 130. The blade shoe 268 is attached to the leaf spring 266. The blade shoe 268 supports the leaf spring 266. The blade shoe 268 is made of resin. The blade shoe 268 includes a plate portion 272, swing fulcrum portion 274, contact/support portion 276 and contact portion 278.

The plate portion 272 covers the side of the leaf spring 266 adjacent to the cam chain 154. The plate portion 272 is provided along the leaf spring 266. The width of the plate portion 272 is generally the same as that of the leaf spring 266. As used herein, "width of the leaf spring 266" means the dimension of the leaf spring measured in a direction of the axis of the crankshaft 56. In other words, "width" means a dimension in a direction perpendicular to the paper in FIG. 6. The plate portion 272 extends in a direction in which the leaf spring 266 extends. The plate portion 272 may be in contact with the cam chain 154, along a front-to-rear direction and between the first and second sprockets 108 and 146.

The swing fulcrum portion 274 is provided at an end (rear end) of the plate portion 272. A support hole 275, into which the bolt 264 can be inserted, is provided in the swing fulcrum portion 274. The swing fulcrum portion 274 is located in the vicinity of the first sprocket 108. The swing fulcrum portion 274 is located forward of at least a portion of the first sprocket 108 in a front-to-rear direction. The bolt 264 is inserted into the support hole 275 in the swing fulcrum portion 174 and the tensioner 258 is swingably supported on the crankcase 84.

The contact/support portion 276 supports the leaf spring 266 by sandwiching the leaf spring 266 with the plate portion 272. The contact/support portion 276 extends from the swing fulcrum portion 274 along the leaf spring 266. One end of the contact/support portion 276 is located in the crankcase 84.

The contact portion 278 is provided at an end (front end) of the leaf spring 166. The contact portion 278 is in contact with the side of the leaf spring 266 opposite the side adjacent to the cam chain 154. The contact portion 278 supports the leaf spring 266 by sandwiching the leaf spring 266 with the plate portion 272. The contact portion 278 may contact the sidewall 232 provided on the head cover 230. The contact portion 278 is located in the vicinity of the second sprocket 146 as measured in a front-to-rear direction.

The operations of the engine are the same as those for the first embodiment, and thus the description thereof will be omitted.

### <Work Procedure for Attaching Cam Chain>

A work procedure for attaching the cam chain 154 during assembly or maintenance of the engine 44 of the motorcycle of the second embodiment will be described.

First, the cylinder body 126 is attached to the crankcase 84. Then, the cylinder head 128 is attached to the cylinder body 126. In this way, the chain room 210, including the first subroom 110, second subroom 138 and third subroom 148, is assembled. At this stage, the bolt 350 for coupling the crankcase 84 and the transmission case 89 is not yet attached. The bolt 192 for coupling the second wall 186, third wall 188 and fourth wall 190 is not yet attached. Thus, a left portion of the first subroom 110 in FIG. 4 is not covered.

Next, the cam chain 154 is wound around the first sprocket 108 provided on the crankshaft 56. At this time, the cam chain 154 engages a rear portion of the first sprocket 108 and is slack.

Next, the tensioner 258 is then inserted into the first subroom 110 through the opening 85 in the crankcase 84 (see FIG. 5). The tensioner 258 is inserted into the second subroom 138 in the cylinder body 126 and the third subroom 148 in the cylinder head 128. At this time, the tensioner 258 is inserted into the second and third subrooms 138 and 148 in such a way that the contact portion 178 of the tensioner 158 defines the leading end. The swing fulcrum portion 274 of the tensioner 258 is positioned in the crankcase 84 and the bolt 264 is put into the hole in the swing fulcrum portion 274. At this stage, the contact portion 278 of the tensioner 258 protrudes forward from the cylinder head 128. At this stage, the tensioner 258 is not tensioning the cam chain 154.

Thereafter, the cam chain 154 is wound around the second sprocket 146. The second sprocket 146, around which the cam chain 254 is wound, is attached to the camshaft 142.

The support member 170 on the head cover 130 is brought into contact with the contact portion 178 of the tensioner 158. With the support member 170 being in contact with the contact portion 178, the contact portion 178 is pressed by the support member 170 while the head cover 130 is attached to the cylinder head 128. The tensioner 158 is deformed elastically to tension the cam chain 154. At this time, the projection 150 on the cylinder head 128 is positioned so as to fit into the depression 152 in the head cover 130. Thereafter, the head cover 130 and cylinder head 128 are fixed to each other by a bolt.

### <Features of Second Embodiment>

Features of the present embodiment will be described below.

In the illustrated embodiment, the contact portion 278 of the tensioner 258 is supported by the head cover 230. Thus, as long as the head cover 230 is not attached to the cylinder head 128, the tensioner 258 does not tension the cam chain 154. As such, the cam chain 154 can be easily attached to the engine 44. Thus, even in an engine 44 including a cylinder head 128 that does not have a sidewall that can be opened, the cam chain 154 may be easily wound around the second sprocket 146 when the head cover 230 is not yet attached.

In the illustrated embodiment, the contact portion 278 of the tensioner 258 is pressed by the head cover 230 while the head cover 230 is attached to the cylinder head 128. Thus, deforming the tensioner 258 so as to tension the cam chain 154 with the tensioner 258 occurs simultaneously with attaching the head cover 230 to the cylinder head 128.

In the illustrated embodiment, when the head cover 230 is not yet attached to the cylinder head 128, the front end of the tensioner 258 protrudes outward from the cylinder head 128. Thus, in the illustrated embodiment, the head cover 230 can be easily brought into contact with the contact portion 278 of the tensioner 258.

In the illustrated embodiment, the second sidewall 271, which is one of the sidewalls constituting the cylinder head 128, slopes gradually upward as it goes forward. Thus, the front end of the tensioner 258 can be easily brought aside before the head cover 230 is attached to the cylinder head 128.

In the illustrated embodiment, a positioning mechanism is provided at the connecting face between the cylinder head 128 and head cover 230 such that the head cover 230 can be easily attached to the cylinder head 128.

Although embodiments of the present invention have been described, the above embodiments are merely examples for carrying out the present invention.

### [Other Embodiments]

Although the illustrated embodiments have described a motorcycle 10 with one cylinder 88, the present invention is not limited to such a configuration and may be used in a motorcycle with several cylinders.

Although the illustrated embodiments have described a motorcycle 10 with one camshaft 142, the present invention is not limited to such a configuration and may be used in a motorcycle with two camshafts.

Although the illustrated embodiments have described a two-wheeled motorcycle, the present invention is not limited to such a configuration and may be used in a straddle type vehicle with three or four wheels.

## Claims

1. An engine including a chain room, comprising:
a crankshaft (56);
a camshaft (142);
a first sprocket (108) attached to the crankshaft;
a second sprocket (146) attached to the camshaft;
a crankcase (84) containing the first sprocket;
a cylinder body (126) attached to the crankcase (84);
a cylinder head (128) attached to the cylinder body;
a head cover (130) attached to the cylinder head;
a chain (154) wound around the first sprocket and the second sprocket; and
a tensioning member (158) configured to tension the chain,
wherein the tensioning member includes
a leaf spring (166), and
a contact member (172) supporting the leaf spring (166) and contactable with the chain in the chain room,
the crankcase (84), the cylinder body (126) and the cylinder head (128) form the chain room containing the chain,
the cylinder body (126) includes a cylindrical portion (194) forming part of the chain room,
the engine (44) further includes:
a support shaft (164) inserted into a support hole (250) formed in the tensioning member for swingably supporting the tensioning member (158) on the crankcase; and
a support member (170) contactable with a supported portion (178) of the tensioning member to support the tensioning member (158), and
the support member is configured to support the tensioning member (158) in such a way that the supported portion (178) is slideable, **characterized in that** the support member (170) is provided on the head cover.

2. The engine according to claim 1, wherein:
the leaf spring (166) has a portion that is curved as viewed in a direction of an axis of the crankshaft; and
if a direction perpendicular to a line segment connecting a shaft center of the crankshaft (56) with a shaft center of the camshaft (142) as viewed in a direction of the axis of the crankshaft and away from the tensioning member (158) toward the chain (154) is a first direction,
the tensioning member supported swingably on the support shaft (164) receives a reaction force having a component in the first direction from the support member (170) of the head cover and receives a reaction force having a component in a second direction from the chain, the second direction being opposite the first direction.

3. The engine according to claim 1, wherein:
the cylinder head (128) has a pair of walls defining the chain room;
the pair of walls are provided so as to cross a direct line perpendicular to a line segment connecting a shaft center of the crankshaft (56) and a shaft center of the camshaft (142) as viewed in a direction of an axis of the crankshaft;
a distance between a portion of one wall in contact with the head cover (130) and the chain is greater than a distance between a portion of another wall in contact with the head cover and the chain; and
the tensioning member (158) is located between the one wall and the chain.

4. The engine according to claim 3, wherein:
the support member (170) is located closer to the chain than the portion of the one wall in contact with the head cover (130) is.

5. The engine according to any one of claims 1 to 4, wherein:
the support member (170) protrudes from an edge of the head cover into a third subroom.

6. The engine according to any one of claims 1 to 5, wherein:
the cylinder head (128) and the head cover (130) have a positioning member configured to prevent the head cover and the cylinder head from being misaligned out of their positions where they are to be fixed when the head cover and the cylinder head are not fixed to each other.

7. The engine according to claim 6, wherein:
the positioning member includes:
one of a concave and a convex on a face of the cylinder head (128) contactable with the head cover; and
another one of the concave and the convex provided on a face of the head cover contactable with the cylinder head and opposite the one of the convex and the concave to fit into the same.

8. The engine according to any one of claims 1 to 7, wherein:
the supported portion (178) is formed at one end portion of the contact member, and
the support hole (250) is formed in another end portion of the contact member.

9. The engine according to any one of claims 1 to 8, wherein:
a face of the cylinder head (128) connectable with the head cover (130) has a larger area than a face thereof connectable with the cylinder body.

10. A straddle type vehicle including the engine according to any one of claims 1 to 9.

11. A method of attaching a chain (154) to an engine having a chain room in which the chain is locatable, comprising:
a first step of fitting together a crankcase (84) having a first subroom for containing a first sprocket (108), a cylinder body (126) attached to the crankcase and having a cylindrical portion (194) defining a second subroom, and a cylinder head (128) attached to the cylinder body and defining a third subroom containing a second sprocket (146) so as to form the chain room including the first subroom, the second subroom and the third subroom;
a second step of winding the chain (154) around the first sprocket provided on a crankshaft;
a third step of attaching, in the crankcase (84), one end of a tensioning member (158) having a leaf spring (166) and a contact member (172) attached to the leaf spring such that the tensioning member is swingable;
a fourth step of winding the chain (154) around the second sprocket;
a fifth step of attaching, to the camshaft (142), the second sprocket around which the chain is wound; and **characterized by**
a sixth step of attaching a head cover (130) to the cylinder head while pressing another end of the tensioning member.

12. The method according to claim 11, wherein:
the tensioning member (158) has a supported portion (178) at the other end;
the head cover (130) has a support member (170) configured to slidably support the supported portion; and
the sixth step includes the step of attaching the head cover (130) to the cylinder head (128) while bringing the support member into contact with the supported portion of the tensioning member and elastically deforming the tensioning member.

13. The method according to claim 11 or 12, wherein:
the third step positions the other end of the tensioning member (158) such that the other end protrudes outside the cylinder head (128).

## Patentansprüche

1. Ein Motor mit einem Kettenraum, umfassend:
eine Kurbelwelle (56);
eine Nockenwelle (142);
ein erstes Kettenrad (108), das an der Kurbelwelle befestigt ist;
ein zweites Kettenrad (146), das an der Nockenwelle befestigt ist;
ein Kurbelgehäuse (84), das das ersten Kettenrad enthält;
einen Zylinderkörper (126), der am Kurbelgehäuse (84) befestigt ist;
einen Zylinderkopf (128), der an dem Zylinderkörper befestigt ist;
einen Kopfdeckel (130), der am Zylinderkopf befestigt ist;
eine Kette (154), die um das erste Kettenrad und dem zweiten Kettenrad gelegt ist; und
ein Spannelement (158), das zum Spannen der Kette ausgelegt ist,
wobei das Spannelement umfasst:
eine Blattfeder (166); und
ein Kontaktelement (172), das die Blattfeder (166) stützt und in Kontakt mit der Kette im Kettenraum bringbar ist,
das Kurbelgehäuse (84), der Zylinderkörper (126) und der Zylinderkopf (128) bilden den Kettenraum mit der Kette,
der Zylinderkörper (126) einen zylindrischen Abschnitt (194) umfasst, der einen Teil des Kettenraum ausbildet,
der Motor (44) ferner umfasst:
eine Tragachse (164), die in ein Lagerloch (250) eingesetzt ist, das in dem Spannelement ausgebildet ist, und das Spannelement (158) schwenkbar auf dem Kurbelgehäuse haltert; und
ein Stützelement (170), das mit einem Stützabschnitt (178) des Spannelements kontaktierbar ist und das Spannelement (158) stützt, und
das Stützelement so ausgelegt ist, dass es das Spannelement (158) derart stützt, dass der Stützabschnitt (178) verschiebbar ist,
**dadurch gekennzeichnet, dass** das Stützelement (170) am Kopfdeckel vorgesehen ist.

2. Motor nach Anspruch 1, wobei:
die Blattfeder (166) einen Abschnitt hat, der, aus einer Richtung einer Achse der Kurbelwelle betrachtet, gebogen ist; und
wenn eine Richtung, die senkrecht zu einem Liniensegment ist, das eine Wellenmitte der Kurbelwelle (56) mit einer Wellenmitte der Nockenwelle (142) verbindet, aus einer Richtung der Achse der Kurbelwelle betrachtet, und von dem Spannelement (158) weg zur Kette (154) gerichtet ist, eine erste Richtung ist,
erfährt das Spannelement, das schwenkbar an der Tragachse (164) gehalten ist, eine Reaktionskraft, die eine Komponente in die erste Richtung hat, von dem Stützelement (170) des Kopfdeckels und eine Reaktionskraft, die eine Komponente in eine zweite Richtung hat, von der Kette, wobei die zweite Richtung entgegengesetzt der ersten Richtung ist.

3. Motor nach Anspruch 1, wobei:
der Zylinderkopf (128) ein Paar Wände hat, die den Kettenraum festlegen;
das Paar von Wänden derart vorgesehen ist, dass es eine direkte Linie kreuzt, die senkrecht zu einem Liniensegment ist, das eine Wellenmitte der Kurbelwelle (56) und eine Wellenmitte der Nockenwelle (142) verbindet, aus einer Richtung einer Achse der Kurbelwelle betrachtet;
ein Abstand zwischen einem Abschnitt einer Wand, der in Kontakt mit dem Kopfdeckel (130) ist, und der Kette größer ist, als ein Abstand zwischen einem Abschnitt der anderen Wand, der in Kontakt mit dem Kopfdeckel ist, und der Kette; und
das Spannelement (158) zwischen der einen Wand und der Kette angeordnet ist.

4. Motor nach Anspruch 3, wobei:
das Stützelement (170) näher an der Kette angeordnet ist, als der Abschnitt der einen Wand, der in Kontakt mit dem Kopfdeckel (130) ist.

5. Motor nach einem der Ansprüche 1 bis 4, wobei:
das Stützelement (170) von einer Kante des Kopfdeckels in einen dritten Unterraum vorsteht.

6. Motor nach einem der Ansprüche 1 bis 5, wobei:
der Zylinderkopf (128) und der Kopfdeckel (130) ein Positionierungselement haben, das dazu ausgelegt ist, zu verhindern, dass der Kopfdeckel und der Zylinderkopf von ihren Positionen, an denen sie befestigt werden sollen, verschoben werden, wenn der Kopfdeckel und der Zylinderkopf nicht aneinander befestigt sind.

7. Motor nach Anspruch 6, wobei:
das Positionierungselement umfasst:
eine konkave oder eine konvexe Oberfläche auf einer Fläche des Zylinderkopfes (128), die mit dem Kopfdeckel kontaktierbar ist; und
eine weitere konkave oder konvexe Oberfläche, die auf einer Fläche des Kopfdeckels vorgesehen ist, die mit dem Zylinderkopf kontaktierbar ist und gegenüber der einen konkaven oder konvexen Oberfläche vorgesehen ist, um in diese eingesetzt zu werden.

8. Motor nach einem der Ansprüche 1 bis 7, wobei:
der Stützabschnitt (178) an einem Endabschnitt des Kontaktelements ausgebildet ist, und
das Lagerloch (250) in einem anderen Endabschnitt des Kontaktelements ausgebildet ist.

9. Motor nach einem der Ansprüche 1 bis 8, wobei:
eine Fläche des Zylinderkopfs (128), die mit dem Kopfdeckel verbindbar ist, eine größere Fläche hat, als eine Fläche desselben, die mit dem Zylinderkörper verbindbar ist.

10. Ein Grätschsitz-Fahrzeug, das den Motor nach einem der Ansprüche 1 bis 9 aufweist.

11. Verfahren zum Befestigen einer Kette (154) an einem Motor mit einem Kettenraum, in dem die Kette anordenbar ist, umfassend:
einen ersten Schritt der Montage zum Zusammenbau eines Kurbelgehäuses (84), das einem ersten Unterraum hat, zur Aufnahme eines ersten Kettenrads (108), eines Zylinderkörpers (126), der an dem Kurbelgehäuse befestigt ist und einen zylindrischen Abschnitt (194) hat, der einen zweiten Unterraum festlegt, und eines Zylinderkopfes (128), der an dem Zylinderkörper angebracht ist und einen dritte Unterraum festlegt, der ein zweites Kettenrad (146) enthält, so dass der Kettenraum ausgebildet ist, einschließlich der ersten Unterraums, des zweiten Unterraums und des dritten Unterraums;
einen zweiten Schritt zum Umlegen der Kette (154) um das erste Kettenrad, das auf der Kurbelwelle vorgesehen ist;
einen dritten Schritt zum Anbringen eines Endes des Spannelements (158) innerhalb des Kurbelgehäuses, das eine Blattfeder (166) hat und ein Kontaktelement (172), das an der Blattfeder derart angebracht ist, dass das Spannelement schwenkbar ist;
einen vierten Schritt zum Umlegen der Kette (154) um das zweite Kettenrad;
einen fünften Schritt zum Anbringen des zweiten Kettenrads an der Nockenwelle (142), um das die Kette gelegt ist, **gekennzeichnet durch**
einen sechsten Schritt zum Anbringens eines Kopfdeckels (130) am Zylinderkopf, während ein anderes Ende des Spannelements gedrückt wird.

12. Verfahren nach Anspruch 11, wobei:
das Spannelement (158) einen Stützabschnitt (178) am anderen Ende hat;
der Kopfdeckel (130) ein Stützelement (170) hat, das so ausgelegt ist, dass es den Stützabschnitt verschiebbar stützt; und
der sechste Schritt den Schritt zum Anbringen des Kopfdeckels (130) am Zylinderkopf (128) enthält, während das Stützelement in Kontakt mit dem Stützabschnitt des Spannelements gebracht wird und das Spannelement elastisch verformt wird.

13. Verfahren nach Anspruch 11 oder Anspruch 12, wobei:
der dritte Schritt das andere Ende des Spannelements (158) derart platziert, dass das andere Ende aus dem Zylinderkopf (128) vorsteht.

## Revendications

1. Moteur thermique incluant un compartiment de chaîne, comprenant :
un vilebrequin (56),
un arbre à cames (142),
une première roue dentée (108) fixée au vilebrequin,
une seconde roue dentée (146) fixée à l'arbre à cames,
un carter moteur (84) contenant la première roue dentée,
un corps de cylindre (126) fixé au carter moteur (84),
une culasse (128) fixée au corps de cylindre,
un couvercle de culasse (130) fixé à la culasse,
une chaîne (154), enroulée autour de la première et de la seconde roue dentée, ainsi qu'un élément de mise en tension (158), configuré pour tendre la chaîne,
dans lequel l'élément de mise en tension inclut :
un ressort à lame (166), et
un élément de mise en contact (172) supportant le ressort à lame (166) et pouvant être en contact avec la chaîne dans le compartiment de chaîne,
le carter moteur (84), le corps de cylindre (126) et la culasse (128) forment le compartiment de chaîne contenant la chaîne,
le corps de cylindre (126) inclut une partie de cylindre (194) formant une pièce du compartiment de chaîne,
le moteur thermique (44) inclut en outre :
un axe de support (164) inséré dans un alésage de support (250) formé dans l'élément de mise en tension afin de supporter en pouvant basculer l'élément de mise en tension (158) sur le carter moteur, et
un élément de support (170) pouvant entrer en contact avec une partie supportée (178) de l'élément de mise en tension afin de supporter l'élément de mise en tension (158), et
l'élément de support est configuré pour supporter l'élément de mise en tension (158) de manière telle que la partie supportée (178) puisse glisser, **caractérisé en ce que** l'élément de support (170) est prévu sur le couvercle de culasse.

2. Moteur thermique selon la revendication 1, dans lequel :
le ressort à lame (166) possède une partie qui est incurvée telle qu'elle est vue dans la direction de l'axe du vilebrequin, et
si une direction, perpendiculaire à un segment de ligne reliant le centre de l'axe du vilebrequin (56) au centre de l'axe de l'arbre à cames (142) tel qu'il est vu dans la direction de l'axe du vilebrequin et à distance de l'élément de mise en tension (158) vers la chaîne (154), représente une première direction,
l'élément de mise en tension supporté avec possibilité de basculement sur l'axe de support (164) subit une force de réaction possédant une composante dans la première direction à partir de l'élément de support (170) du couvercle de culasse, et il subit une force de réaction possédant une composante dans une seconde direction à partir de la chaîne, la seconde direction étant opposée à la première direction.

3. Moteur thermique selon la revendication 1, dans lequel
la culasse (128) comporte une paire de parois définissant le compartiment de chaîne, la paire de parois est prévue de façon à croiser une ligne directe perpendiculaire à un segment de ligne reliant le centre de l'axe du vilebrequin (56) et le centre de l'axe de l'arbre à cames (142) tels qu'ils sont vus dans la direction de l'axe du vilebrequin,
la distance entre une partie de la première paroi entrée en contact avec le couvercle de culasse (130) et la chaîne est supérieure à la distance entre une partie de l'autre paroi entrée en contact avec le couvercle de culasse et la chaîne, et
l'élément de mise en tension (158) est situé entre la première paroi et la chaîne.

4. Moteur thermique selon la revendication 3, dans lequel :
l'élément de support (170) est situé de façon plus proche de la chaîne que la partie de la première paroi en contact avec le couvercle de culasse (130) ne l'est.

5. Moteur thermique selon l'une quelconque des revendications 1 à 4, dans lequel :
l'élément de support (170) dépasse d'une bordure du couvercle de culasse dans un troisième compartiment auxiliaire.

6. Moteur thermique selon l'une quelconque des revendications 1 à 5, dans lequel :
la culasse (128) et le couvercle de culasse (130) possèdent un élément de positionnement configuré pour empêcher le couvercle de culasse et la culasse de se désaligner des positions où ils doivent être fixés lorsque le couvercle de culasse et la culasse ne sont pas fixés l'un à l'autre.

7. Moteur thermique selon la revendication 6, dans lequel :
l'élément de positionnement inclut :
l'une d'une surface concave et d'une surface convexe sur la face de la culasse (128) pouvant entrer en contact avec le couvercle de culasse, et
une autre d'une surface concave et d'une surface convexe prévue sur la face du couvercle de culasse pouvant entrer en contact avec la culasse et de forme inverse à la première de la surface convexe et de la surface concave afin de s'ajuster dans celle-ci.

8. Moteur thermique selon l'une quelconque des revendications 1 à 7, dans lequel :
la partie supportée (178) est formé à une extrémité de l'élément de mise en contact, et
l'alésage de support (150) est formé à l'autre extrémité de l'élément de mise en contact.

9. Moteur thermique selon l'une quelconque des revendications 1 à 8, dans lequel :
une face de la culasse (128) pouvant entrer en contact avec le couvercle de culasse (130) présente une surface plus grande que la face de celle-ci pouvant entrer en contact avec le corps de cylindre.

10. Véhicule de type à selle incluant le moteur thermique conforme à l'une quelconque des revendications 1 à 9.

11. Procédé de fixation d'une chaîne (154) sur un moteur thermique comportant un compartiment de chaîne dans lequel on peut loger la chaîne, comprenant:
une première étape consistant à ajuster ensemble un carter moteur (84) comportant un premier compartiment auxiliaire permettant de contenir une première roue dentée (108), un corps de cylindre (126) fixé au carter moteur et présentant une partie de cylindre (194) définissant un deuxième compartiment auxiliaire, ainsi qu'une culasse (128) fixée au corps de cylindre et définissant un troisième compartiment auxiliaire contenant une seconde roue dentée (146) de façon à former le compartiment de chaîne incluant le premier compartiment auxiliaire, le deuxième compartiment auxiliaire et le troisième compartiment auxiliaire,
une deuxième étape consistant à enrouler la chaîne (154) autour de la première roue dentée ménagée sur un vilebrequin
une troisième étape consistant à fixer, dans le carter moteur (84), une première extrémité d'un élément de mise en tension (158) comportant un ressort à lame (166) et un élément de mise en contact (172) fixé au ressort à lame de telle sorte que l'élément de mise en tension puisse basculer,
une quatrième étape consistant à enrouler la chaîne (154) autour de la seconde roue dentée,
une cinquième étape consistant à fixer, sur le vilebrequin (142), la seconde roue dentée autour de laquelle est enroulée la chaîne, et **caractérisé par**
une sixième étape consistant à fixer un couvercle de culasse (130) à la culasse tout en pressant l'autre extrémité de l'élément de mise en tension.

12. Procédé selon la revendication 11, dans lequel :
l'élément de mise en tension (158) comporte une partie supportée (178) à l'autre extrémité,
le couvercle de culasse (130) comporte un élément de support (170) configuré pour supporter avec une possibilité de glissement la partie supportée, et
la sixième étape inclut l'étape consistant à fixer le couvercle de culasse (130) à la culasse (128) tout en mettant en contact l'élément de support avec la partie supportée de l'élément de mise en tension et en déformant élastiquement l'élément de mise en tension.

13. Procédé selon la revendication 11 ou 12, dans lequel :
la troisième étape positionne l'autre extrémité de l'élément de mise en tension (158) de telle sorte que l'autre extrémité dépasse à l'extérieur de la culasse (128).
